Europäisches Patentamt

European Patent Office

Office européen des brevets

(11) Publication number: 0 677 559 A2

# EUROPEAN PATENT APPLICATION

(21) Application number: 95104948.5

(22) Date of filing: 03.04.95

(51) Int. Cl.⁶: C09D 17/00, C04B 14/30

(30) Priority: 15.04.94 US 228070

(43) Date of publication of application:
18.10.95 Bulletin 95/42

(84) Designated Contracting States:
AT BE CH DE DK ES FR GB GR IE IT LI NL SE

(71) Applicant: Bayer Corporation
One Mellon Center
500 Grant Street
Pittsburgh, PA 15219-2502 (US)

(72) Inventor: De Witte, Hans J.
165 Highview Drive
Pittsburgh, PA 15241 (US)

(74) Representative: Steiling, Lothar, Dr. et al
Bayer AG
Konzernzentrale RP
Patente Konzern
D-51368 Leverkusen (DE)

(54) Color enhanced iron oxide and a process for preparing colored concrete products.

(57) The present invention relates to a composition containing in physical admixture an iron oxide pigment powder having an average particle size of less than 50 microns and 0.5 to 5% by weight, based on the weight of the pigment, of a water dispersible or water soluble lignin-containing compound, such composition containing less than 2 parts of pozzolan per 1 part of pigment.

The present invention also relates to a process for the preparation of a colored concrete product by
a) preparing a slurry containing an iron oxide pigment powder having an average particle size of less than 50 microns; 0.5 to 5% by weight, based on the weight of the pigment, of a water dispersible or water soluble lignin-containing compound; and at least a portion of the water necessary to form the colored concrete product, such slurry containing less than 2 parts of pozzolan per 1 part of pigment and
b) mixing the resulting slurry with aggregate, cement and the remainder of the water, if any, to form the colored concrete product.

EP 0 677 559 A2

## BACKGROUND OF THE INVENTION

### Field of the Invention

The present invention is directed to a composition containing an iron oxide pigment and water dispersible or water soluble lignin-containing compound as a color enhancing additive and to a process for preparing colored concrete products having improved color intensity.

### Description of the Prior Art

When concrete is to be given a colored finish, cement-bonded building materials, such as concrete, mortar, bricks, concrete block, pavers and roof tiles, are generally colored with inorganic pigments, preferably iron oxides. The iron oxide pigments are available in various colors such as red, black, brown and yellow. By using mixtures of these pigments, it is possible to obtain a wide variety of shades.

The pigments are normally used in powder form for coloring concrete products. In powder form, they have the advantage of ready dispersibility. The pigment powders are homogeneously distributed in concrete mixtures in a short time of up to a few minutes. One of the disadvantages of these colored concrete products is that with the short mixing times commonly used in the building materials industry, the coloring strength of the pigment cannot be fully developed. Therefore, larger quantities of pigment have to be used to obtain a given color intensity for the concrete product.

Accordingly, it is an object of the present invention to improve the color intensity of colored concrete products without affecting the performance properties of these products.

This object may be achieved in accordance with the present invention by using mixtures of iron oxides with water soluble salts of lignin sulfonates as described hereinafter as the coloring agents.

U.S. Patent 4,946,505 discloses the use of various binders, including lignin sulfonates, as pelleting agents for binding iron oxide powders into larger iron oxide granules. However, this reference does not disclose that the lignin sulfonates provide any color enhancement to the resulting concrete products.

Lignin sulfonates are also known as dispersing agents for the preparation of colored concrete products. However, the use of such dispersing agents are generally unnecessary when using iron oxide pigments in powder form.

U.S. Patent 3,068,109 is directed to the use of a blend of iron oxide pigment, pozzolan and optionally a dispersing agent, such as sodium lignin sulfonate, to enhance the color of colored concrete products. It is disclosed that a ratio of pozzolan to mineral pigment of at least 5:1 is necessary to improve the color intensity. When less than this amount of pozzolan is present, the color of the product is not uniform and more pigment is necessary to obtain the same color intensity.

## SUMMARY OF THE INVENTION

The present invention relates to a composition containing in physical admixture an iron oxide pigment powder having an average particle size of less than 50 microns and 0.5 to 5% by weight, based on the weight of the pigment, of a water dispersible or water soluble lignin-containing compound, such composition containing less than 2 parts of pozzolan per 1 part of pigment.

The present invention also relates to a process for the preparation of a colored concrete product by

a) preparing a slurry containing an iron oxide pigment powder having an average particle size of less than 50 microns; 0.5 to 5% by weight, based on the weight of the pigment, of a water dispersible or water soluble lignin-containing compound; and at least a portion of the water necessary to form the colored concrete product, such slurry containing less than 2 parts of pozzolan per 1 part of pigment and

b) mixing the resulting slurry with aggregate, cement and the remainder of the water, if any, to form the colored concrete product.

## DETAILED DESCRIPTION OF THE INVENTION

In accordance with the present invention the term "physical admixture" means that the pigment powders are blended with the color enhancing additives as opposed to using the coloring enhancing additives as a pelleting agent to bind the pigment powders into granules as disclosed in U.S. Patent 4,946,505.

Suitable pigment powders for use in accordance with the present invention are iron oxide pigments, which are available in various colors such as brown, yellow, red and black. Especially preferred for the present invention are red iron oxide pigments, which show the greatest improvement in color enhancement. The pigments have an average particle size of less than 50 microns, preferably less than 20 microns and more preferably less than 15 microns.

In accordance with the present invention the pigment powders are used in combination with water dispersible or water soluble lignin-containing compounds. In addition to water soluble salts of sulfonated lignins, the water dispersible or water soluble lignin-containing compounds include unsulfonated lignins and lignin-containing compounds which also contain free acid groups, preferably sulfonic acid groups.

Even though these compounds are not water dispersible or water soluble, they may be blended with known emulsifiers to increase their hydrophilicity and enable them to be dispersed or dissolved in water. Also suitable are water soluble salts of unsulfonated lignins in which the salts are formed by neutralizing carboxyl or phenolic groups contained in the lignins with the cations described below.

Preferred lignin-containing compounds are the water soluble salts of sulfonated lignins, more preferably the ammonium or alkali metal salts and most preferably the sodium salt. Examples of these water soluble salts are well known and include those available from Westvaco Corporation under the Reax and Polyfon tradenames and from LignoTech USA, Inc. under the Norlig, Lignosol and Lignosite tradenames.

In order to obtain improvements in color intensity in accordance with the present invention, the water soluble salts of sulfonated lignins are used in an amount of 0.5 to 5% by weight, preferably 1 to 3% by weight, based on the weight of the pigment powders.

Contrary to the teachings of U.S. Patent 3,068,109 the compositions of the present invention do not require the presence of pozzolan to increase the color intensity of the pigment, provided that the pigments are blended with the color enhancers of the present invention. The compositions according to the invention contain less than 2 parts of pozzolan, preferably less than 1 part of pozzolan, per 1 part of pigment. More preferably, the compositions according to the invention do not contain pozzolan.

The pigment and color enhancing additive may be incorporated into the concrete products by blending it with the aggregate or cement in dry form prior to the addition of water. However, it is preferred to form a slurry containing the pigment powder and color enhancing agent and to blend the resulting slurry with the aggregate, cement and any remaining water to form the colored concrete products. Improvements in color intensity are obtained when the concrete products are prepared by initially forming the slurry as opposed to dry blending the pigment powder and color enhancing additive with the aggregate and concrete.

The amount of water which is blended with the pigment powder and color enhancing additive to form the slurry is not critical and ranges from all of the water which is to be used to prepare the concrete product to an amount which is sufficient to form a slurry having a solids content of less than 80% by weight, preferably less than 65% by weight. The minimum amount of water that is sufficient to form the slurry is dependent upon the color of the pigment, e.g., more water is need to prepare a slurry containing yellow or black iron oxide pigments than is needed to prepare a slurry containing red iron oxide pigments. Generally 5 to 40% of the total amount of water to be used to prepare the concrete product is sufficient to form the slurry.

The use of the slurry process for preparing colored concrete is especially useful at concrete manufacturing facilities where automatic metering equipment is used to add the components for concrete preparation. Because of the difficulty of metering the pigment powders due to their very fine particle size and their tendency to form agglomerates, lumps, etc., it is advantageous to convert the powders into a slurry for use in the automatic metering equipment. Accordingly, to use the present invention at these facilities, it is only necessary to additionally incorporate the color enhancing additive into the pigment powder-containing slurry.

The invention is further illustrated, but is not intended to be limited by the following examples in which all parts and percentages are by weight unless otherwise specified.

EXAMPLES

Example 1

General preparation procedure

Slurries were prepared from 50 parts of iron oxide, 1 part of the color enhancer and 49 parts of water. The pigment was either a red iron oxide pigment (Bayferrox Red 110, available from Miles), a yellow iron oxide pigment (Bayferrox Yellow 420, available from Miles) or a black iron oxide pigment (Bayferrox Black 330, available from Miles). The type of pigment and color enhancer are set forth in the Table.

Concrete was prepared from 30 parts of white Portland cement, 90 parts of white silica sand, 1.8 grams of the previously described slurries and 10.52 parts of water. The mixtures were pressed into a 2"x4" specimen, cured and dried. The color intensity of the concrete was then determined by means of a reflection spectrophotometer using a 45°/0° measurement geometry. Three measurements were taken across each of the concrete surfaces obtained in the examples and comparison examples and averaged. For the tinting strength (color intensity) calculation the following parameters were used: CIE Standard Illuminant C, 1964 CIE Supplementary Standard Observer (10° observer), specular component included.

It has been found that the calculated apparent tinting strength correlates with the actual visual tinting strength of pigments in concrete. This apparent tinting strength may be calculated from the software "ColorSoft" available from ColorTec. The results are set forth in the Table.

| Color Enhancer | | Red Pigment | Yellow Pigment | Black Pigment |
|---|---|---|---|---|
| None | | 100.00 | 100.00 | 100.00 |
| Reax[1] | 80C | 115.04 | 114.39 | 101.35 |
| Reax[1] | 80N | 114.47 | 122.98 | 103.14 |
| Reax[1] | 81A | 108.76 | 113.23 | 101.81 |
| Reax[1] | 83A | 112.12 | 110.31 | 101.20 |
| Reax[1] | 85A | 124.76 | 116.31 | 102.56 |
| Reax[1] | 88A | 111.23 | 116.65 | 105.30 |
| Reax[1] | 88B | 106.25 | 115.64 | 96.78 |
| Reax[1] | 905 | 115.50 | N/A | 97.81 |
| Reax[1] | 907 | 111.57 | 114.74 | 105.82 |
| Reax[1] | 910 | 116.15 | 120.11 | 99.16 |
| Reax[1] | 915 | 111.49 | 121.32 | 104.82 |
| Reax[1] | 100M | 110.23 | 112.09 | 99.52 |
| Reax[1] | 45A | 118.84 | 115.63 | 107.55 |
| Reax[1] | 45DTC | 110.19 | 115.32 | 106.91 |
| Reax[1] | 45L | 113.12 | 115.61 | 96.43 |
| Reax[1] | 38 | 116.02 | 115.80 | 106.38 |
| Polyfon[1] | H | 121.21 | 119.70 | 107.55 |
| Norlig[2] | 42C | 112.65 | N/A | 110.24 |
| Lignosol[2] | S-65 | 106.14 | 119.83 | 99.25 |
| Lignosite[2] | 458 | 107.58 | 119.41 | 102.44 |
| Lignosite[2] | 518 | 105.40 | 114.69 | 103.66 |
| Colloid[3] 231 | (Comp) | 100.98 | N/A | N/A |
| Bayhibit[4] EXT-N | (Comp) | 102.27 | N/A | N/A |
| Texigel[5] 23-500 | (Comp) | 98.84 | N/A | N/A |
| Polywet[6] ND-2 | (Comp) | 99.62 | N/A | N/A |
| Nopcosperse[7] 44 | (Comp) | 99.18 | N/A | N/A |

1 - available from Westvaco Corporation

2 - available from LignoTech USA, Inc.

3 - a sodium polyacrylate pigment dispersion, available from Rhone-Poulenc

4 - a pigment dispersant, i.e., the sodium salt of phosphonobutane tricarboxylic acid, available from Miles

5 - an anionic polyelectrolyte pigment dispersant, available from Pacific Scott Bader

6 - an anionic polyelectrolyte pigment dispersant, available from Uniroyal

7 - an anionic polyelectrolyte pigment dispersant, available from Henkel

The results obtained for the comparison examples demonstrate that pigment dispersants, in general, are not suitable as color enhancing additives. Therefore, the fact that only the lignin-containing compounds according to the invention provide significant improvements in color must be regarded as surprising and unexpected.

Example 2 (Comparison)

To demonstrate the improvements which are obtained when using the slurry process in accordance with the present invention, a homogeneous blend was prepared from 97.5 parts of red iron oxide pigment and 2.5 parts of Reax 85A dispersant. Concrete was then prepared from 30 parts of white Portland cement, 90 parts of white silica sand, 0.9 grams of the homogeneous blend and 11.4 parts of water. The mixtures were pressed into a 2"x4" specimen, cured and dried. The value of the color intensity, which was determined as described above, was 107.85.

Example 3 (Comparison)

Example 2 was repeated with the exception that the iron oxide pigment was first added during concrete preparation followed by the addition of the dispersant. The value of the color intensity, which was determined as described above, was 105.68.

The values for the color intensity obtained in Examples 2 and 3, were significantly lower than the value of the color intensity obtained when Reax 85A dispersant was added in accordance with the slurry process according to the invention, (i.e., 124.76 as set forth in the Table). The differences in color intensity demonstrate the improvements which may obtained by using the slurry process to prepare colored concrete products.

Example 4

A slurry was prepared from 196 parts water, 4 parts of Reax 85A dispersant, 106 parts of a yellow iron oxide pigment (Bayferrox Yellow 420, available from Miles), 84 parts of a red iron oxide pigment (Bayferrox Red 110, available from Miles) and 10 parts of a black iron oxide pigment (Bayferrox Black 330, available from Miles), resulting in a 50% pigments solids slurry. Concrete was prepared from 700 parts of gray Portland cement, 2100 parts of sand, 31.6 parts of the previously described slurry (15.8 parts pigment) and sufficient water to obtain an extrudable concrete. Concrete roof tiles were formed by extrusion, cured and dried. The color intensity of the concrete was then determined as described above.

Example 5 (Comparison)

Comparison concrete roof tiles were prepared from 700 parts of gray Portland cement, 2100 parts of sand, 26.6 parts of a 74.3% slurry (19.8 parts pigment) and sufficient water to obtain an extrudable concrete. Concrete roof tiles were formed by extrusion, cured and dried. The slurry contained the same proportion of pigments which were used to prepare the slurry in Example 4, but did not contain the color enhancer. The color intensity of the concrete was then determined as described above.

The color intensities of the roof tiles obtained in Examples 4 and 5 were the same even though 25% more pigment was present in the concrete roof tiles of Example 5. These examples demonstrate that the presence of the color enhancer in Example 4 enabled the use of less pigment to obtain the same color intensity.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

**Claims**

1. A composition comprising in physical admixture an iron oxide pigment powder having an average particle size of less than 50 microns and 0.5 to 5% by weight, based on the weight of the pigment, of a water dispersible or water soluble lignin-containing compound, said composition containing less than 2 parts of pozzolan per 1 part of pigment.

2. The composition of Claim 1 wherein said iron oxide pigment powder comprises a red iron oxide pigment powder.

3. The composition of Claim 1 wherein said water dispersible or water soluble lignin-containing compound is a water soluble salt of a sulfonated lignin.

4. The composition of Claim 2 wherein said water dispersible or water soluble lignin-containing compound is a water soluble salt of a sulfonated lignin.

5. The composition of Claim 3 wherein said water soluble salt of a sulfonated lignin is the sodium salt.

6. The composition of Claim 4 wherein said water soluble salt of a sulfonated lignin is the sodium salt.

7. A process for the preparation of a colored concrete product which comprises
   a) preparing a slurry containing an iron oxide pigment powder having an average particle size of less than 50 microns; 0.5 to 5% by weight, based on the weight of the pigment, of a water dispersible or water soluble lignin-containing compound; and at least a portion of the water necessary to form the colored concrete product, said slurry containing less than 2 parts of pozzolan per 1 part of pigment and
   b) mixing the resulting slurry with aggregate, cement and the remainder of the water, if any, to form the colored concrete product.

8. The process of Claim 7 wherein said iron oxide pigment powder comprises a red iron oxide pigment powder.

9. The process of Claim 7 wherein said water dispersible or water soluble lignin-containing compound is a water soluble salt of a sulfonated lignin.

10. The process of Claim 8 wherein said water dispersible or water soluble lignin-containing compound is a water soluble salt of a sulfonated lignin.

11. The process of Claim 7 wherein said water soluble salt of a sulfonated lignin is the sodium salt.

12. The process of Claim 8 wherein said water soluble salt of a sulfonated lignin is the sodium salt.